Europäisches Patentamt

European Patent Office

Office européen des brevets

(11) Publication number: **0 406 445 A1**

# EUROPEAN PATENT APPLICATION
## published in accordance with Art. 158(3) EPC

(21) Application number: 90901663.6

(22) Date of filing: 06.01.90

(86) International application number:
PCT/JP90/00007

(87) International publication number:
WO 90/07749 (12.07.90 90/16)

(51) Int. Cl.⁵: **G06F 15/60**

(30) Priority: 06.01.89 JP 425/89

(43) Date of publication of application:
09.01.91 Bulletin 91/02

(84) Designated Contracting States:
DE FR GB

(71) Applicant: **FANUC LTD**
**3580, Shibokusa Aza-Komanba Oshinomura**
**Minamitsuru-gun Yamanashi 401-05(JP)**

(72) Inventor: **SEKI, Masaki 3-15-2-406,**
**Takaidonishi**
**Suginami-ku**
**Tokyo 168(JP)**
Inventor: **TAKEGAHARA, Takashi 256-2,**
**Nishiteragata-machi**
**Hachioji-shi**
**Tokyo 192-01(JP)**
Inventor: **ARAKAKI, Takeshi Room 106,**
**Kowarejidensu**
**2-25-1, Harayama Urawa-shi**
**Saitama 336(JP)**

(74) Representative: **Billington, Lawrence Emlyn et**
**al**
**Haseltine Lake & Co Hazlitt House 28,**
**Southampton Buildings Chancery Laneane**
**London WC2A 1AT(GB)**

(54) **GRAPHIC PARAMETER SETTING AND PLOTTING METHOD.**

(57) This invention relates to a graphic parameter setting and plotting method which can set rapidly and easily suitable graphic parameters sufficient to form a graphic in a desired size at a desired position on a plotter sheet and which can suitably make plotting. The profile shape of a plotter sheet and the figure as the object of plotting are drawn in the same scale on a display screen in accordance with the selection of the plotter sheet to be used for plotting (S1,S2) and when a scale value is thereafter inputted manually so as to change the magnification of plotting, the figure as the object of plotting is either enlarged or reduced on the display screen (S6, S7). When the correction position of the origin of the figure on the screen is inputted manually in order to change the plotting position, the figure as the object of plotting moves on the screen (S8, S9). On the other hand, the profile shape of the sheet does not

change on the screen and eventually, the plotting image which represents visually the estimated plotting result in accordance with the graphic parameters is drawn on the screen. Thereafter, plotting is made by a plotter true to a specified plotting image in accordance with the graphic parameters wich are made definite by an operator (S10).

FIG.2

2

- 1 -

# S P E C I F I C A T I O N
## METHOD OF SETTING PLOTTING PARAMETERS
## AND CARRYING OUT PLOTTING

### Technical Field

The present invention relates to a method of setting plotting parameters and carrying out a plotting, and more particularly, to a plotting parameter setting and plotting method, which is capable of quickly and easily setting suitable plotting parameters that permit figures created by a computer-aided design and manufacturing (CAD/CAM) system to be plotted on plotter paper at a desired position and with a desired size, and capable of carrying out a plotting appropriately.

### Background Art

Conventionally known is to plot figures, created by a CAD/CAM system and drawn on the screen of a graphic display (CRT), on plotter paper at a desired position and with a desired size by means of a plotter, which is operated under the control of an information processor of the CAD/CAM system. In this plotting method, plotting parameters are manually set by an operator at the time of plotting operation of the plotter. Namely, the operator inputs a plotting subject area of the drawn figure concerned, a plotting position (a coordinate position in the plotter coordinate system corresponding to the origin of the figure drawing coordinate system), and a plotting scale (the ratio of the dimensions of a figure to be plotted to those of the drawn figure) to the information processor.

In this manner, in the case of plotting a drawn figure on plotter paper at a desired position and with a desired size, the conventional plotting parameter

- 2 -

setting method involves a labor-consuming work of calculating and manually inputting the plotting position and the plotting scale. Moreover, it is difficult to set the plotting parameters to suitable values by a single setting operation, and usually, the parameters must be corrected based on the figures plotted in accordance with tentatively set plotting parameters, requiring much labor in the parameter setting.

Disclosure of the Invention

An object of the present invention is to provide a plotting parameter setting method which is capable of quickly and easily setting suitable plotting parameters that permit figures to be plotted on plotter paper at a desired position and with a desired size, by visually displaying a plotted image.

Another object of the present invention is to provide a plotting method capable of a proper, quick and easy plotting.

To achieve the above objects, according to one aspect of the present invention, there is provided a plotting parameter setting method, which comprises the steps of: (a) manually selecting plotter paper to be used for plotting; (b) drawing an outline of the thus selected plotter paper on a display screen; (c) manually setting a drawing scale and a drawing position respectively corresponding to a plotting scale and a plotting position, in a manner permitting correction; and (d) drawing a subject figure to be plotted, on the display screen at the drawing position and on the drawing scale thus set.

According to another aspect of the invention, a plotting method is provided, which comprises the steps of: (a) manually selecting plotter paper to be used for plotting; (b) drawing an outline of the thus selected plotter paper on a display screen; (c) manually setting a drawing scale and a drawing position respectively corresponding to a plotting scale and a plotting position, in a manner permitting correction; (d) drawing a subject figure to be plotted, on the display screen at the drawing position and on the drawing scale thus set; (e) manually and definitely determining the drawing scale and the drawing position; and (f) effecting a plotting at a plotting position on the plotter paper corresponding to the determined drawing position on a plotting scale corresponding to the determined drawing scale.

As described above, according to the present invention, a subject figure to be plotted is drawn at the manually set drawing position on the manually set drawing scale on the display screen on which the outline of plotter paper to be used for plotting is also drawn, whereby a plotted image representing the result of plotting in accordance with the plotting scale corresponding to the drawing scale and the plotting position corresponding to the drawing position can be visually displayed. Accordingly, an operator has only to enlarge, reduce and move the subject figure on the plotter paper drawn on the display screen, by correcting the drawing scale and the drawing position in light of the on-screen plotted image, so as to determine suitable plotting parameters that enable the figure to be plotted at a desired position on the plotter paper on a desired scale. It is therefore unnecessary to carry out a tentative plotting in accordance with tentatively set plotting parameters, and suitable plotting parameters can be quickly and easily determined. Since plotting is carried out in

- 4 -

accordance with the thus determined plotting parameters, the figure can be quickly and easily plotted at a desired position on the plotter paper with a desired size.

Brief Description of the Drawings

Fig. 1 is a schematic block diagram showing a principal part of a CAD system for embodying a parameter setting and plotting method according to one embodiment of the present invention;

Fig. 2 is a flowchart of a process for setting plotting parameters and carrying out plotting, executed by the system of Fig. 1;

Fig. 3 is a diagram showing displayed contents on a graphic display device in Fig. 1 when a plotting parameter setting mode is selected;

Fig. 4 is a diagram similar to Fig. 3, which is displayed immediately before a plotting scale is changed;

Fig. 5 is a diagram similar to Fig. 3, which is displayed after drawn figures are reduced;

Fig. 6 is a diagram similar to Fig. 3, which is displayed immediately before a plotting position is changed;

Fig. 7 is a diagram similar to Fig. 3, which is displayed after drawn figures are moved; and

Fig. 8 is a diagram showing, by way of example, figures plotted on plotter paper.

Best Mode of Carrying Out the Invention

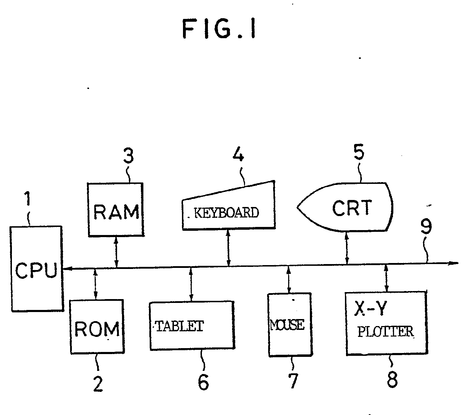

Referring to Fig. 1, a CAD system to which a plotting parameter setting and plotting method according to one embodiment of the present invention is applied comprises a processor (hereinafter referred to as CPU) 1, a read-only memory (ROM) 2, a random-access memory (RAM) 3, a keyboard 4, a graphic display device (hereinafter referred to as CRT) 5, a tablet 6, a mouse 7, and an XY plotter 8, as conventionally known, the elements 2 to 8 being connected to the CPU 1 through busses 9. Drawing data created by using the tablet 6 and/or the mouse 7 and transferred from an external memory (not shown) is stored in the RAM 3 under the control of the CPU 1 which operates in accordance with a control program stored in the ROM 2.

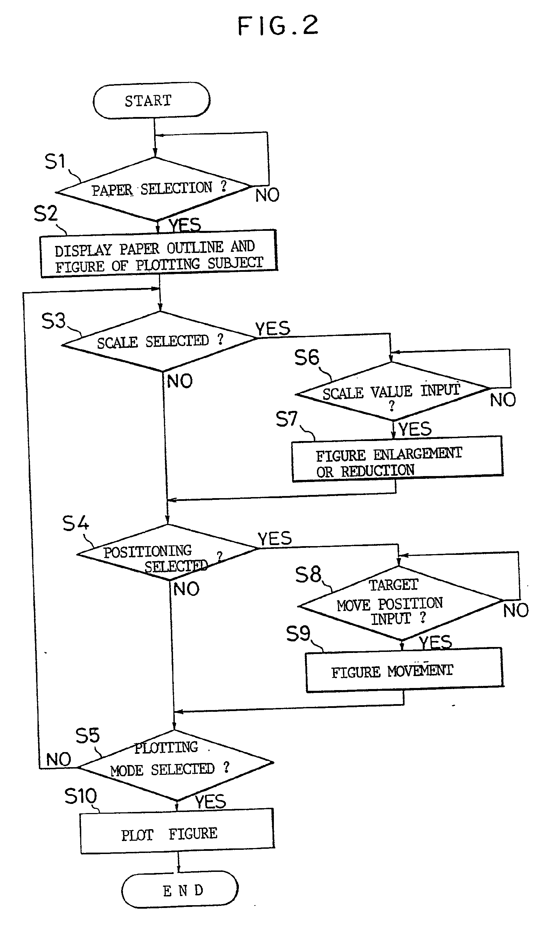

The operation of the above CAD system will be described with reference to Figs. 2 through 8.

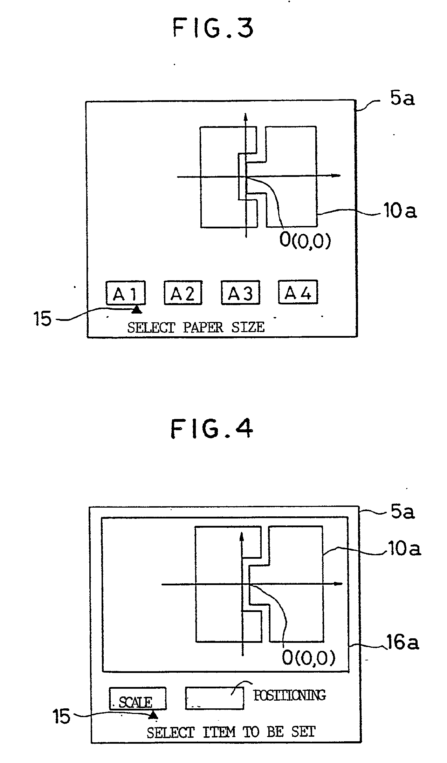

First, while a figure 10a to be plotted by the plotter 8 is displayed on a CRT screen 5a, an operator operates the tablet 6 to move a tablet cursor 15 to the position of a plotting parameter setting mode in a tablet menu, not shown, and selects the mode, whereby items indicating types (sizes) of plotter paper, e.g., four items "A1" to "A4", and the message "SELECT PAPER SIZE", requesting the operator to select the type of plotter paper to be used for plotting, are displayed beneath the figure 10a drawn on the CRT screen 5a (Fig. 3). In response to the selection of the plotting parameter setting mode, the CPU 1 starts a process for setting plotting parameters and carrying out plotting, shown in Fig. 2. Namely, the CPU 1 repeatedly determines whether or not paper selection has been made (step S1).

When the operator operates the tablet 6 to move the tablet cursor 15 to the item indicating the type of plotter paper to be used for plotting, e.g., "A1", and picks the same item "A1", the CPU 1 determines a scale value and a drawing position by which an outline 16a of plotter paper indicating the selected "A1" size can be drawn full on the CRT screen 5a with predetermined margins from the four edges of the screen.

The CRT 5 displays the paper outline 16a along the screen edges, and re-displays the already drawn figure 10a with a scale value equal to that by which the paper outline is drawn, on the screen 5a under the control of the CPU 1. Namely, the figure 10a and the paper outline 16a are drawn on the same scale, in other words, a plotted image is displayed, which is representative of the result of plotting in accordance with plotting parameters corresponding to the current plotting scale and the current plotting position. The CRT 5 then displays two selection items "SCALE" and "POSITIONING", and the message "SELECT ITEM TO BE SET", requesting an item selection, beneath the drawn outline 16a (step S2). Viewing the plotted image displayed on the CRT screen 5a, the operator can judge whether or not the figure will be plotted at a desired position of the plotter paper on a desired scale, i.e., whether or not the plotting position and plotting scale are suitable. During this time, the CPU 1 repeatedly determines whether the item "SCALE" or "POSITIONING" has been selected (steps S3 and S4).

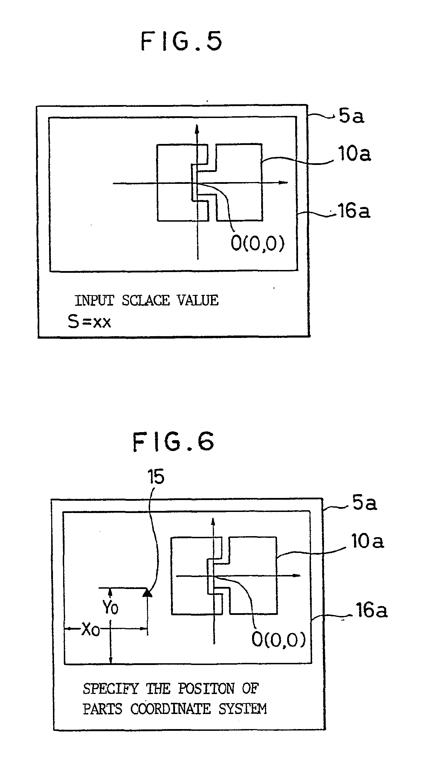

Generally, the plotted image displayed at the time of plotter paper selection, and accordingly, the plotting position and plotting scale, are not appropriate. In such a case, the operator moves the graphic cursor 15 to, e.g., the item "SCALE", and picks same, to correct the drawing scale value and thereby change the plotting scale. When the selection of the item "SCALE" is detected in step S3, the CPU 1 controls the CRT 5 to display the message "INPUT SCALE VALUE", requesting an input of a scale value S (Fig. 5). When the operator inputs a scale value S by operating the keyboard 4 and this operation is detected in step S6, the CPU 1 controls the CRT 5 to display the subject

- 7 -

figure 10a in accordance with the scale value S (step S7). As a result, the figure 10a is enlarged or reduced on the CRT screen 5a. At the time of figure enlargement or reduction, the paper outline 16a is drawn with the initial scale value, not the scale value S, and accordingly, the size thereof remains unchanged. For the sake of explanation, a display representation in which the figure 10a is reduced due to an inputting of the scale value S is shown in Fig. 5. The two selection items "SCALE" and "POSITIONING" and the message requesting a selection of one of the two items are displayed again on the CRT screen 5a.

If, then, the operator moves the graphic cursor 15 to, e.g., the item "POSITIONING" and picks same, to correct the drawing position of the figure 10a (parts coordinate system) on the CRT screen 5a and thereby shift the plotting position, the CPU 1 detects the selection of the item "POSITIONING" in step S4 and then controls the CRT 5 to display the message "SPECIFY THE POSITION OF PARTS COORDINATE SYSTEM", requesting an input of a target position to which the figure is to be moved (Fig. 6). The operator operates the tablet 6 to move the graphic cursor 15 to a target position for movement of the origin 0 (0, 0) of the parts coordinate system and picks the target position, or operates the keyboard 4 to input a coordinate position (X0, Y0) specifying the target position of the origin of the parts coordinate system within a plotter paper coordinate system having an origin thereof coinciding with the lower left corner of the plotter paper.

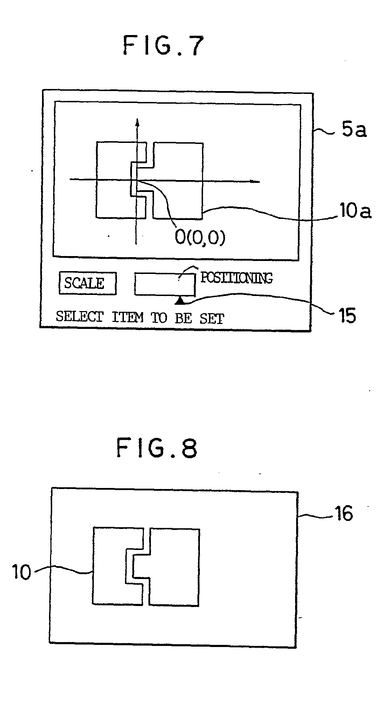

If it is determined in step S8 that the target position of the origin of the parts coordinate system has been input, the CPU 1 alters the figure data stored in the RAM 3 in accordance with the target position (step S9).  The CRT 5 then displays the figure 10a on the CRT screen 5a in accordance with the altered figure data (Fig. 7), that is, the figure 10a is moved on the CRT screen 5a.  At the time of figure movement, the paper outline 16a is displayed at the initial position, and accordingly, the on-screen position thereof remains unchanged.  Then, the two selection items "SCALE" and "POSITIONING" and the message requesting a selection of one of the items are displayed again on the CRT screen 5a.

Thereafter, every time the operator changes the scale value S or the position of the origin of the parts coordinate system, the figure 10a is enlarged or reduced or moved on the CRT screen 5a while the paper outline 16a is displayed at the initial drawing position on the initial drawing scale, and the plotted image visually representing the estimated result of plotting is correspondingly varied on the CRT screen 5a.  If the operator judges that the figure with a desired size can be plotted at a desired position on the plotter paper, viewing the plotted image on the screen, the operator selects a plotting mode by operating the tablet 6.  Upon detecting the selection of the plotting mode in step S5, the CPU 1 drives the plotter 8 (step S10).  The plotter plots the figure 10 on the plotter paper 16 under the control of the CPU 1, such that the plotted figure is at the desired position and on the desired scale, definitely determined at the time of plotting mode selection, and is in conformity with the on-screen plotted image displayed on the CRT screen 5a (Fig. 8).

The present invention is not limited to the above-described embodiment, and various modifications are possible.

- 9 -

For instance, in the above embodiment, when the paper outline is first displayed, the figure to be plotted is re-displayed on the same scale as that of the paper outline, but the figure may be displayed on the initial scale.

- 10 -

# C L A I M S

1. A plotting parameter setting method comprising the steps of:

(a) manually selecting plotter paper to be used for plotting;

(b) drawing an outline of the thus selected plotter paper on a display screen;

(c) manually setting a drawing scale and a drawing position respectively corresponding to a plotting scale and a plotting position, in a manner permitting correction; and

(d) drawing a subject figure to be plotted, on the display screen at the drawing position and on the drawing scale thus set.

2. A plotting parameter setting method according to claim 1, wherein, in said step (a), a size of plotter paper to be used for plotting is manually selected.

3. A plotting parameter setting method according to claim 1, wherein, in said step (b), the subject figure is drawn on the display screen together with the outline of the plotter paper.

4. A plotting parameter setting method according to claim 3, wherein the subject figure is drawn on the display screen prior to the execution of said step (b), and in said step (b) the subject figure is re-drawn on a drawing scale equal to that on which the outline of the plotter paper is drawn.

5. A plotting parameter setting method according to claim 1, wherein, in said step (b), the outline of the plotter paper is drawn full on the display screen.

6. A plotting parameter setting method according to claim 1, wherein, in said step (d), the subject figure is permitted to be enlarged, reduced and moved

- 11 -

on the display screen while the drawing position and size of the outline of the plotter paper are kept unchanged.

7. A plotting method comprising the steps of:

(a) manually selecting plotter paper to be used for plotting;

(b) drawing an outline of the thus selected plotter paper on a display screen;

(c) manually setting a drawing scale and a drawing position respectively corresponding to a plotting scale and a plotting position, in a manner permitting correction;

(d) drawing a subject figure to be plotted, on the display screen at the drawing position and on the drawing scale thus set;

(e) manually and definitely determining the drawing scale and the drawing position; and

(f) effecting a plotting at a plotting position on the plotter paper corresponding to the determined drawing position on a plotting scale corresponding to the determined drawing scale.

# FIG.1

# FIG.2

START

S1 — PAPER SELECTION ? → NO

YES

S2 — DISPLAY PAPER OUTLINE AND FIGURE OF PLOTTING SUBJECT

S3 — SCALE SELECTED ? → YES

NO

S6 — SCALE VALUE INPUT ? → NO

YES

S7 — FIGURE ENLARGEMENT OR REDUCTION

S4 — POSITIONING SELECTED ? → YES

NO

S8 — TARGET MOVE POSITION INPUT ? → NO

YES

S9 — FIGURE MOVEMENT

S5 — PLOTTING MODE SELECTED ?

NO

YES

S10 — PLOT FIGURE

END

# FIG.3

5a

10a

0(0,0)

| A1 | A2 | A3 | A4 |

15

SELECT PAPER SIZE

# FIG.4

5a

10a

0(0,0)

16a

| SCALE | | POSITIONING |

15

SELECT ITEM TO BE SET

## FIG.5

INPUT SCLACE VALUE

S =xx

## FIG.6

SPECIFY THE POSITON OF
PARTS COORDINATE SYSTEM

# FIG.7

SCALE       POSITIONING

SELECT ITEM TO BE SET

0(0,0)

~ 5a

10a

15

# FIG.8

16

10

# INTERNATIONAL SEARCH REPORT

International Application No PCT/JP90/00007

**I. CLASSIFICATION OF SUBJECT MATTER** (if several classification symbols apply, indicate all) ⁶

According to International Patent Classification (IPC) or to both National Classification and IPC

Int. Cl⁵     G06F15/60

**II. FIELDS SEARCHED**

| Minimum Documentation Searched ⁷ | |
|---|---|
| Classification System | Classification Symbols |
| IPC | G06F15/60 |

Documentation Searched other than Minimum Documentation
to the Extent that such Documents are Included in the Fields Searched ⁸

| | |
|---|---|
| Jitsuyo Shinan Koho | 1926 – 1990 |
| Kokai Jitsuyo Shinan Koho | 1971 – 1990 |

**III. DOCUMENTS CONSIDERED TO BE RELEVANT** ⁹

| Category * | Citation of Document, ¹¹ with indication, where appropriate, of the relevant passages ¹² | Relevant to Claim No. ¹³ |
|---|---|---|
| A | JP, A, 63-310080 (Fanuc Ltd.), 19 December 1988 (19. 12. 88), Fig. 3 (Family: none) | 1, 7 |
| A | JP, A, 63-310079 (Fanuc Ltd.), 19 December 1988 (19. 12. 88), Fig. 4 (Family: none) | 1, 7 |
| A | JP, A, 63-181074 (Fanuc Ltd.), 26 July 1988 (26. 07. 88), Fig. 1 (Family: none) | 1, 7 |

\* Special categories of cited documents: ¹⁰

"A" document defining the general state of the art which is not considered to be of particular relevance

"E" earlier document but published on or after the international filing date

"L" document which may throw doubts on priority claim(s) or which is cited to establish the publication date of another citation or other special reason (as specified)

"O" document referring to an oral disclosure, use, exhibition or other means

"P" document published prior to the international filing date but later than the priority date claimed

"T" later document published after the international filing date or priority date and not in conflict with the application but cited to understand the principle or theory underlying the invention

"X" document of particular relevance; the claimed invention cannot be considered novel or cannot be considered to involve an inventive step

"Y" document of particular relevance; the claimed invention cannot be considered to involve an inventive step when the document is combined with one or more other such documents, such combination being obvious to a person skilled in the art

"&" document member of the same patent family

**IV. CERTIFICATION**

| Date of the Actual Completion of the International Search | Date of Mailing of this International Search Report |
|---|---|
| March 1, 1990 (01. 03. 90) | March 19, 1990 (19. 03. 90) |

| International Searching Authority | Signature of Authorized Officer |
|---|---|
| Japanese Patent Office | |

Form PCT/ISA/210 (second sheet) (January 1985)